# FASCICULE DE BREVET EUROPEEN

(11) **EP 0 628 254 B1**
(45) Date de publication et mention de la délivrance du brevet: **16.09.1998**
(21) Numéro de dépôt: 93109364.5
(22) Date de dépôt: 11.06.1993
(51) Int. Cl.: A23G 9/24, A23P 1/08, B05C 19/06

(54) **Procédé et appareil de fabrication d'articles de confiserie glacée**
Verfahren und Vorrichtung zur Herstellung von Eiskonfekt
Process and apparatus for the production of frozen confection

(43) Date de publication de la demande: 14.12.1994
(73) Titulaire: Société des Produits Nestlé S.A., 1800 Vevey (CH)
(72) Inventeur: Bertrand, Francis-Victor, F-60510 Laversines (FR); Mange, Christian, F-60000 Beauvais (FR)
(74) Mandataire: Archambault, Jean

(56) Documents cités:
- EP-A- 0 411 174
- EP-A- 0 462 309
- US-A- 4 447 458
- US-A- 4 643 905

## Description

L'invention concerne un procédé et un appareil de fabrication d'articles de confiserie glacée enrobés avec une matière particulaire sèche, notamment sous forme de flocons.

Les articles de confiserie glacée enrobés de matières particulaires solides sont généralement fabriqués au moyen d'appareils comprenant un tapis transporteur des portions glacées unitaires, une trémie de dosage au dessus de la chaîne délivrant un rideau de matière particulaire au travers duquel les portions cheminent et un élément de recyclage des matières particulaires. L'élément de recyclage peut être un élévateur à godets ou un tambour à auge traversé par le tapis, comme décrit par exemple dans FR-A- 2419028 ou US-A-4762083. L'utilisation de dispositifs en mouvement pour recycler les particules n'est pas compatible avec l'enrobage de particules fragiles d'une certaine dimension comme, par exemple, des flocons de céréales qui doivent pouvoir garder leur intégrité.

US-A-4643905 a trait à la préparation d'articles de confiserie glacée au moyen d'un appareil comprenant un convoyeur pour transporter des portions de confiserie visqueuses à demi congelées vers un applicateur de particules à jets d'air et vibrant situé de manière à projeter une quantité mesurée de particules sur les portions transportées et ensuite vers une zône de refroidissement pour refroidir la portion recouverte de particules, puis vers une zône d'enrobage de la portion refroidie avec une composition grasse liquide telle que du chocolat. Il n'y a aucune description des moyens destinés à refroidir.

Dans le passage col. 1, l. 48 à col. 2, l. 2, il est fait mention d'un document antérieur du même inventeur, US-A-4189289, qui concerne la préparation de sucettes glacées enrobées d'une couverture chocolatée recouverte à son tour de particules d'annexe. Les articles sont produits au moyen d'un appareil comprenant un convoyeur qui transporte des ébauches de sucettes congelées par leur bâtonnet vers différents postes comprenant, successivement, un dispositif de pulvérisation de chocolat liquide sur les ébauches et de récupération du liquide en excés, un dispositif souffleur d'air chaud destiné à réchauffer la couche de couverture chocolatée à la surface des articles enrobés et un dispositif de projection de particules d'annexe pour recouvrir la surface réchauffée des articles.

Le problème à la base de la présente invention est l'enrobage d'une portion glacée avec une matière particulaire sèche et fragile, notamment des flocons de céréales, de manière que la portion soit entièrement recouverte de matière particulaire sur la face supérieure et sur les côtés, et que la matière particulaire garde sa forme et sa croustillance à l'entreposage et à la consommation.

Le procédé selon l'invention est caractérisé par le fait que l'on pré-enrobe la portion glacée congelée au moins sur sa face supérieure et sur ses côtés avec une couverture grasse liquide, que l'on recouvre uniformément la surface grasse encore molle de matière particulaire en entourant la portion glacée d'un lit de matière particulaire solide tout en refroidissant, que l'on sépare les articles sur lesquels la matière particulaire solide a adhéré de la matière particulaire solide libre et que l'on recycle la matière particulaire essentiellement non brisée de manière à la réutiliser.

Lorsque l'on qualifie la matière particulaire "d'essentiellement non brisée", l'on entend que la majeure partie de celle-ci est restée intacte et que les fines éventuelles sont éliminées avant la réutilisation, par exemple au moyen d'un tamis. En effet, l'opération de séparation des fines est préférée, car leur présence à la surface de la couverture grasse pourrait empêcher l'adhérence des particules, ce qui conduirait à un recouvrement non uniforme.

Dans un mode de réalisation préféré, l'on enrobe les portions et la matière particulaire avec une couverture grasse liquide de manière à recouvrir la face supérieure, les côtés et le talon des articles.

Ainsi, la matière particulaire est entièrement recouverte d'un enrobage faisant barrière d'humidité tant vis-à-vis de la crème glacée que de l'environnement extérieur.

L'appareil selon l'invention est caractérisé par le fait qu'il comprend:
une unité de pré-enrobage de la face supérieure et des côtés des portions glacées avec une composition grasse liquide,
une unité d'enrobage de particules comprenant des moyens de déversement d'un lit de particules entourant la face supérieure et les côtés des portions glacées recouvertes de composition grasse, des moyens de séparation et de recirculation des particules en excès et des moyens de refroidissement.

Dans un mode de réalisation préféré, l'appareil comprend en outre une unité d'enrobage final des portions glacées avec une composition grasse liquide.

La description détaillée ci-après d'un mode de réalisation particulier de l'appareil et de son fonctionnement donné à titre d'exemple et faite en regard des dessins illustre l'invention.
Dans les dessins:
La figure 1 est un schéma de l'appareil,
La figure 2 est un shéma de l'unité d'enrobage de matière particulaire et la figure 3 est une représentation en perspective et en coupe transversale d'un article de confiserie glacée obtenu par la mise en oeuvre d'un mode de réalisation particulier du procédé selon l'invention.

L'appareil est partie intégrante d'une installation comportant, en amont de l'appareil, une bande tranporteuse animée d'un mouvement de translation horizontal sur laquelle on extrude un boudin continu de confiserie glacée que l'on congèle, par exemple dans un tunnel de congélation, puis que l'on coupe en portions. Les portions sont ensuite reprises par une bande transporteuse accélérée par rapport à la bande transporteuse de départ de manière à les espacer. Leur température est de préférence inférieure ou égale à -35°C. Ces opérations sont effectuées de manière conventionnelle et ne sont pas représentées.

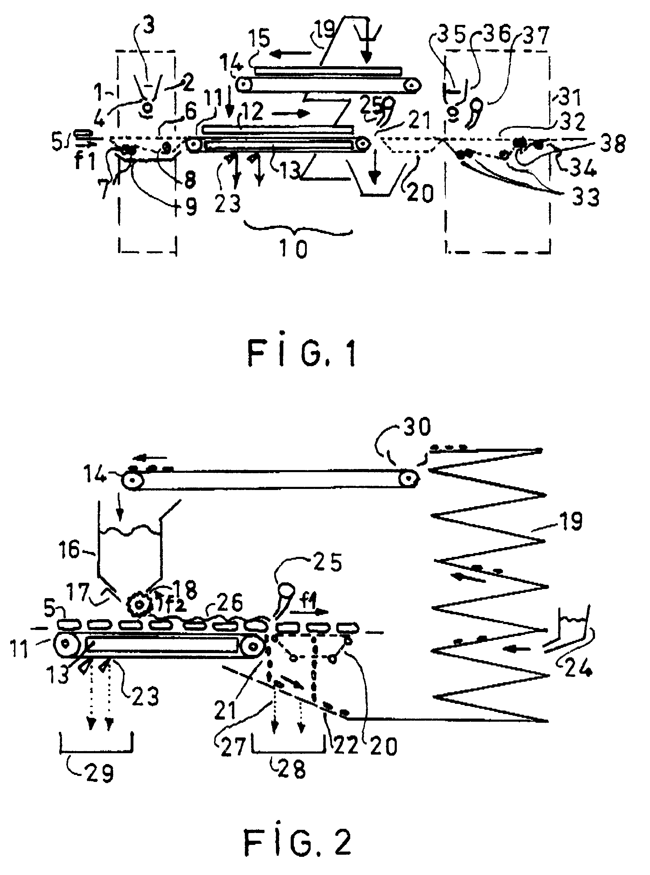

A la figure 1, l'unité de pré-enrobage 1 comprend une trémie 2 d'alimentation en composition liquide 3, par exempe en couverture chocolatée, thermostatée à environ 38°C au moyen d'un fluide calorigène, par exemple de l'eau circulant dans une double paroi de la trémie. A la sortie de la trémie, le liquide 3 passe par gravité à travers une fente 4 réglable disposée radialement par rapport à la direction de cheminement f1 des portions 5. En sortie de la fente, la composition liquide est distribuée en un rideau de couverture chocolatée. Les portions sont reprises par la bande grillagée 6 et passent sous le rideau liquide de couverture chocolatée déversé par l'ajutage en fente où elles sont pré-enrobées sur leur face supérieure et sur leurs côtés. La bande grillagée 6 est maintenue tendue par les rouleaux de tension 7 et nettoyée par l'arbre lécheur 8, tournant de préférence en sens inverse de la direction de déplacement de la bande 6 et disposé sur son brin de retour. Une auge 9 recueille la couverture liquide, qui peut être recyclée vers la trémie 2, par exemple au moyen d'une pompe non représentée. A la sortie de l'unité de pré-enrobage, les portions sont transférées vers l'unité d'enrobage de matière particulaire.

Telle que représentée aux figures 1 et 2, l'unité 10 d'enrobage de matière particulaire comprend une bande transporteuse pleine 11, animée d'un mouvement de tranlation horizontale de gauche à droite, qui reprend les portions pré-enrobées. La bande 11 est délimitée par deux guides verticaux 12 de chaque côté, de sorte que la bande et les guides forment une gouttière en U. En dessous du brin d'aller de la bande 11 et en contact avec celui-ci, est située une table de réfrigération 13, thermostatée par un fluide, par exemple l'eau glycolée à une température inférieure ou égale à environ -20°C. La table 13 sert à figer le peu de couverture liquide qui tombe sur la bande et à maintenir froides les portions 5. Au-dessus de la bande 11, l'unité 10 comprend une bande transporteuse pleine 14, animée d'un mouvement de translation horizontale de droite à gauche et pourvue de guides verticaux 15, qui forment avec la bande 14 une gouttière en U. La bande 14 pourrait être remplacée par une goulotte vibrante. Une trémie 16 est disposée entre les bandes 11 et 14. La trémie 16 comprend une trappe 17 et un rouleau lisse 18 dont les rôles seront expliqué en détail ci-après.

L'unité 10 comprend également un élévateur constitué d'une vis vibrante 19. L'unité 10 comprend encore une table 20 à rouleaux tournants autonettoyants, dont le bord d'attaque est espacé du bord de fuite de la bande 11, par exemple à une distance de 2 à 4 cm, ce qui délimite un espace de chute 21. En dessous de l'espace 21 et de la table 20, une plaque perforée 22 servant de tamis recueille la matière particulaire qui est dirigée vers la vis vibrante 19. A l'extrémité de son brin de retour, la bande 11 est râclée au moyen des couteaux 23. A un niveau intermédiaire, la vis vibrante est alimentée en matière particulaire neuve par la trémie 24. Une soufflerie 25 est disposée au dessus de l'espace 21.

L'enrobage de matière particulaire a lieu de la manière suivante:
La matière particulaire 26 est déversée depuis la trémie 16 sur et autour des portions 5 transportées par la bande 11. Les portions 5 sont ainsi immergées dans un lit de matière particulaire alors que leur face supérieure et leurs côtés sont pré-enrobés de couverture chocolatée encore collante, c'est à dire dans un état non figé en surface. Le débit de matière particulaire détermine la hauteur du lit sur la bande 11, la hauteur souhaitée étant environ 4 cm. Ce débit est réglé par l'ouverture plus ou moins grande de la trappe 17 et la vitesse de rotation du rouleau lisse 18 qui tourne selon la flèche f2, c'est à dire dans le sens des axes tournants de la bande 11. A la sortie de la bande 11, la matière particulaire n'ayant pas adhéré sur les portions chute dans l'espace 21 et à travers les mailles de la bande grillagée 20, entrainée par la soufflerie 25. Les fines 27 formées éventuellement par la brisure des particules, passent au travers de la plaque perforée 22 servant de tamis et sont éliminées dans le plateau 28. La matière particulaire destinée à être recyclée est remontée par la vis vibrante 19 au niveau de la bande 14. Les débris râclés par les couteaux 23 sont éliminés dans le plateau 29. Pour compenser la consommation et les pertes, de la matière particulaire neuve est déversée par la trémie 24 dans la vis vibrante 19. Au sommet de la vis vibrante, la matière particulaire est déversée par la trémie 30 sur la bande 14, puis celle-ci est acheminée vers la trémie 16.

A la sortie de l'unité d'enrobage 10, les portions 5 sont entièrement recouvertes sur leur face supérieure et sur leurs côtés de matière particulaire essentiellement sans brisures.

La matière particulaire peut être choisie parmi les ingrédients secs et fragiles habituellement utilisés en confiserie et en chocolaterie comme annexes tels que les morceaux de sucre cuit, de nougatine, de fruits secs ou confits et les céréales, soufflées ou extrudées et particulièrement les flocons, par exemple de riz.

Le procédé et l'appareil selon l'invention sont avantageux dans le cas d'annexes constituées de particules plates d'une certaine dimension relativement fragiles, ou de tout autre matière particulaire présentant des dimensions et une fragilité analogues.

Un cas particulier préféré de matière particulaire est constitué par exemple de flocons de riz se présentant sous forme de pétales cuits et toastés de 2 à 8 mm, qui sont fragiles et absorbent l'humidité. Cette matière est sujette à la perte de croustillance par hygroscopie, qualité qui est jugée essentielle du point de vue organoleptique. C'est pourquoi, selon un mode de réalisation préféré du procédé et de l'appareil, on prévoit en sus l'enrobage total des portions avec une composition grasse faisant office de barrière d'humidité.

Dans ce mode de réalisation, les portions sortant de l'unité d'enrobage 10 sont tranférés vers l'unité d'enrobage 31 de composition grasse liquide, par exemple de couverture chocolatée, sur la bande grillagée 32. La bande 32 est entrainée et maintenue tendue par les rouleaux de tension 33 et nettoyée sur son brin de retour par l'arbre lécheur 34. La composition d'enrobage 35, par exemple une couverture chocolatée à environ 35°C est appliquée en rideau depuis la trémie thermostatée 36 sur la face supérieure et sur les cotés des portions de la même manière que pour l'unité de pré-enrobage 1, la couverture est étalée et l'excès de couverture éliminé au moyen de la soufflerie 37. L'unité 31 comporte également des rouleaux râclés 38 tournant l'un et l'autre dans le même sens et dont le rôle est de former et de maintenir une vague de couverture chocolatée qui permet l'application d'un talon de couverture.

A la sortie de l'unité 31, les portions enrobées sont conduites vers des moyens de refroidissement, puis d'enveloppage, par exemple en "flow-pack" non représentés.

Dans les figures, on a représenté schématiquement la fabrication d'articles en forme de barres se présentant en une ligne pour des raisons de simplification. Bien entendu le procédé et l'appareil peuvent de la même manière traiter des articles individuels de formes différentes tels que par exemple des bouchées. Les portions peuvent se présenter en rangées sur plusieurs lignes.

Bien entendu, l'appareil selon l'invention est commandé par un automate programmable qui conduit les différentes bandes transporteuses en synchronisme les unes avec les autres, avec les éléments de distribution des matières d'enrobage et avec les postes d'extrusion, de refroidissement et de coupe en amont, et de refroidissement et d'enveloppage en aval.

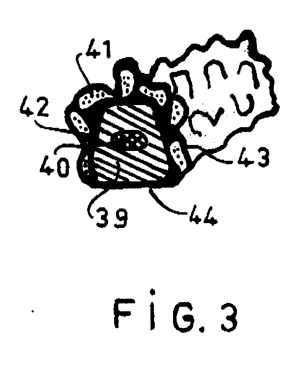

L'article susceptible d'être fabriqué par la mise en oeuvre du procédé et au moyen de l'appareil représenté à la figure 3 comporte un noyau co-extrudé de crème glacée aromatisée à la vanille 39 et de caramel 40, enrobé de flocons de riz toastés 41 entre deux couches de couverture de chocolat au lait 42 et 43 sur sa face supérieure et ses côtés et un talon 44 de couverture de chocolat au lait 43.

## Revendications

1. Procédé de fabrication d'articles de confiserie glacée enrobés avec une matière particulaire sèche, notamment sous forme de flocons, caractérisé par le fait que l'on pré-enrobe la portion glacée congelée au moins sur sa face supérieure et sur ses côtés avec une couverture grasse liquide, que l'on recouvre uniformément la surface grasse encore molle de matière particulaire en entourant la portion glacée d'un lit de matière particulaire solide tout en refroidissant, que l'on sépare les articles sur lesquels la matière particulaire solide a adhéré de la matière particulaire libre et que l'on recycle la matière particulaire essentiellement non brisée de manière à la réutiliser.

2. Procédé selon la revendication 1, caractérisé par le fait, qu'avant son recyclage, on débarasse la matière particulaire des fines qu'elle est susceptible de contenir par tamisage.

3. Procédé selon la revendication 1, caractérisé par le fait que l'on enrobe les portions et la matière particulaire avec une couverture grasse liquide de manière à recouvrir la face supérieure, les côtés et le talon des articles.

4. Procédé selon la revendication 1, caractérisé par le fait que l'on recycle la matière particulaire au moyen d'un élévateur à vis vibrante.

5. Procédé selon la revendication 1, caractérisé par le fait que la matière particulaire d'enrobage est constituée de flocons de céréales, notamment de riz se présentant sous la forme de pétales toastés.

6. Appareil de fabrication d'articles de confiserie glacée enrobés avec une matière particulaire solide, notamment sous forme de flocons, caractérisé par le fait qu'il comprend:
une unité de pré-enrobage de la face supérieure et des côtés des portions glacées avec une composition grasse liquide,
une unité d'enrobage de particules comprenant des moyens de déversement d'un lit de particules entourant la face supérieure et les côtés des portions glacées recouvertes de composition grasse, des moyens de séparation et de recirculation des particules en excès et des moyens de refroidissement.

7. Appareil selon la revendication 6, caractérisé par le fait qu'il comprend en outre une unité d'enrobage final des protions glacées avec une composition grasse liquide.

8. Appareil selon la revendication 6 ou 7, caractérisé par le fait que les moyens de recirculation des particules comprennent un élévateur à vis vibrante.

9. Article de confiserie glacée enrobé, susceptible d'être fabriqué par la mise en oeuvre du procédé selon l'une des revendications 1 à 5, caractérisé par le fait qu'il comporte un noyau co-extrudé de crème glacée aromatisée à la vanille et de caramel, que le noyau est enrobé de flocons de riz toastés entre deux couches de couverture de chocolat au lait sur sa face supérieure et ses côtés, et d'un talon de couverture de chocolat au lait.

## Claims

1. Process for producing ice confectionery articles coated with a dry particulate material, particularly in the form of flakes, characterized in that the frozen ice portion is pre-coated at least on its upper face and on its sides with a liquid fatty coating, that the still soft fatty surface is uniformly covered with particulate material by surrounding the ice portion with a bed of solid particulate material, accompanied by cooling, that the articles on which the solid particulate material has adhered are separated from the free solid particulate material and that the substantially unbroken particulate material is recycled so as to be re-used.

2. Process according to Claim 1, characterized in that, before it is recycled, the particulate material is freed from the fines which it is capable of containing by screening.

3. Process according to Claim 1, characterized in that the portions and the particulate material are coated with a liquid fatty composition so as to cover the upper face, the sides and the heel of the articles.

4. Process according to Claim 1, characterized in that the particulate material is recycled by means of a vibrating-screw elevator.

5. Process according to Claim 1, characterized in that the particulate coating material is constituted by flakes of cereals, particularly of rice which are present in the form of toasted petals.

6. Apparatus for producing ice confectionery articles coated with a solid particulate material, particularly in the form of flakes, characterized in that it comprises:
a unit for pre-coating the upper face and the sides of the ice portions with a liquid fatty composition,
a unit for coating with particles comprising means for discharging a bed of particles surrounding the upper face and the sides of the ice portions covered with fatty composition, means for separating and recirculating the surplus particles and cooling means.

7. Apparatus according to Claim 6, characterized in that it further comprises a unit for final coating of the ice portions with a liquid fatty composition.

8. Apparatus according to Claim 6 or 7, characterized in that the means for recirculating the particles comprise a vibrating-screw elevator.

9. Coated article of ice confectionery, capable of being produced by implementing the process according to one of Claims 1 to 5, characterized in that it comprises a co-extruded core of vanilla-flavoured ice cream and of caramel, that the core is coated with toasted rice flakes between two layers of milk chocolate coating on its upper face and its sides, and with a heel of milk chocolate coating.

## Patentansprüche

1. Verfahren zur Herstellung von Eiskonfektartikeln, die mit einem trockenen Partikelmaterial insbesondere in Form von Flocken umhüllt sind, dadurch gekennzeichnet, daß man das gefrorene Eisstück mindestens auf seiner Oberseite und auf seinen Seitenflächen mit einer flüssigen fetten Kuvertüre vorbeschichtet, daß man die noch weiche fette Oberfläche gleichmäßig mit Partikelmaterial bedeckt, indem man das Eisstück mit einem Bett aus festem Partikelmaterial unter Kühlen umgibt, daß man die Artikel, auf denen das feste Partikelmaterial haften geblieben ist, vom freien Partikelmaterial trennt und daß man das im wesentlichen nicht gebrochene Partikelmaterial zur Wiederverwendung rezykliert.

2. Verfahren nach Anspruch 1, dadurch gekennzeichnet, daß das Partikelmaterial vor seiner Rezyklierung durch Sieben von den Feinanteilen befreit wird, die es enthalten kann.

3. Verfahren nach Anspruch 1, dadurch gekennzeichnet, daß man die Stücke und das Partikelmaterial mit einer flüssigen fetten Kuvertüre umhüllt, so daß die Oberseite, die Seitenflächen und der Boden der Artikel bedeckt werden.

4. Verfahren nach Anspruch 1, dadurch gekennzeichnet, daß man das Partikelmaterial mit Hilfe eines Schwingschnecken-Hubförderers rezykliert.

5. Verfahren nach Anspruch 1, dadurch gekennzeichnet, daß das Umhüllungspartikelmaterial aus Getreideflocken, insbesondere aus Reisflocken in Form von gerösteten Blättchen besteht.

6. Vorrichtung zur Herstellung von Eiskonfektartikeln, die mit einem festen Partikelmaterial insbesondere in Form von Flocken umhüllt sind, dadurch gekennzeichnet, daß sie eine Einheit zur Vorbeschichtung der Oberseite und der Seitenflächen der Eisstücke mit einer flüssigen fetten Zusammensetzung und eine Einheit zum Umhüllen mit Partikeln umfaßt,
die Einrichtungen zum Ausschütten eines Partikelbetts, das
die Oberseite und die Seitenflächen der mit fetter Zusammensetzung beschichteten Eisstücke umgibt, Einrichtungen zum Abtrennen und Rezyklieren der überschüssigen Partikel und Kühleinrichtungen aufweist.

7. Vorrichtung nach Anspruch 6, dadurch gekennzeichnet, daß sie außerdem eine Einheit zum abschließenden Umhüllen der Eisstücke mit einer flüssigen fetten Zusammensetzung aufweist.

8. Vorrichtung nach Anspruch 6 oder 7, dadurch gekennzeichnet, daß die Einrichtungen zur Rezyklierung der Partikel einen Schwingschnecken-Hubförderer aufweisen.

9. Umhüllter Eiskonfektartikel, der durch Anwendung des Verfahrens nach einem der Ansprüche 1 bis 5 hergestellt werden kann, dadurch gekennzeichnet, daß er einen koextrudierten Kern aus mit Vanille und Karamel aromatisierter Eiscreme besitzt und daß der Kern mit gerösteten Reisflocken zwischen zwei Schichten aus Milchschokoladekuvertüre auf seiner Oberseite und seinen Seitenflächen und mit einem Boden aus Milchschokoladekuvertüre umhüllt ist.
